# EUROPÄISCHE PATENTSCHRIFT

(11) **EP 1 896 697 B1**
(45) Veröffentlichungstag und Bekanntmachung des Hinweises auf die Patenterteilung: **10.12.2008**
(21) Anmeldenummer: 06763674.6
(22) Anmeldetag: 13.06.2006
(51) Int. Cl.: F01K 23/10

(54) **VERFAHREN ZUM HOCHFAHREN EINER GAS- UND DAMPFTURBINENANLAGE**
METHOD OF STARTING UP A GAS AND STEAM TURBINE PLANT
PROCÉDÉ POUR LE DÉMARRAGE D'UNE INSTALLATION À TURBINE À GAZ ET À VAPEUR

(30) Priorität: 21.06.2005 EP 05013382
(43) Veröffentlichungstag der Anmeldung: 12.03.2008
(73) Patentinhaber: SIEMENS AKTIENGESELLSCHAFT, 80333 München (DE)
(72) Erfinder: EMBERGER, Holger-Max, 9470 Buchs (CH)
(86) Internationale Anmeldenummer: PCT/EP2006/063150
(87) Internationale Veröffentlichungsnummer: WO 2006/136513

(56) Entgegenhaltungen:
- EP-A- 1 072 760
- PATENT ABSTRACTS OF JAPAN Bd. 015, Nr. 232 (M-1124), 13. Juni 1991 (1991-06-13) & JP 03 070804 A (TOSHIBA CORP), 26. März 1991 (1991-03-26)
- PATENT ABSTRACTS OF JAPAN Bd. 017, Nr. 064 (M-1364), 8. Februar 1993 (1993-02-08) & JP 04 272409 A (TOSHIBA CORP), 29. September 1992 (1992-09-29)
- PATENT ABSTRACTS OF JAPAN Bd. 008, Nr. 203 (M-326), 18. September 1984 (1984-09-18) & JP 59 093907 A (TOSHIBA KK; others: 01), 30. Mai 1984 (1984-05-30)
- DOLEZAL R: "ANFAHREN EINES AUF 550 DEG C ERHITZTEN DURCHLAUF-ABHITZEKESSELS OHNE ABGASBYPASS IM HEIZKRAFTWERK DER UNIVERSITAT STUTTGART" VGB KRAFTWERKSTECHNIK, VGB KRAFTWERKSTECHNIK GMBH. ESSEN, DE, Bd. 69, Nr. 12, 1. Dezember 1989 (1989-12-01), Seiten 1163-1166, XP000085719 ISSN: 0372-5715

## Beschreibung

Die vorliegende Erfindung betrifft ein Verfahren zum Hochfahren einer Gas- und Dampfturbinenanlage mit einer Gasturbine, einer Dampfturbine, wenigstens einem Wasser-Dampf-Kreislauf und wenigstens einer Bypassstation, über die der Wasser-Dampf-Kreislauf an der Dampfturbine vorbeigeführt werden kann, auf eine vorgegebene Anlagenlast.

Verharen zum Hochfahren von Gas - und Dampfturbinenanlagen sind in JP-A-0 307 084 und in EP-A-1 072 760 offenbart.

Gas- und Dampfturbinenanlagen bzw. Kraftwerke (GUD-Kraftwerke) werden häufig als sogenannte Mittellastkraftwerke eingesetzt. Ein wichtiges Merkmal der Mittellastkraftwerke ist die Startzeit, also die Zeit bis eine definierte Anlagenleistung zur Verfügung steht. Eine kurze Startzeit ist unter anderem deshalb vorteilhaft, weil sie die Möglichkeit der Teilnahme am Regelenergiemärkten wie etwa der Minuten- oder Stundenreserve ermöglicht. Ein an der Minutenreserve teilnehmendes Kraftwerk muss in der Lage sein, nach wenigen Minuten (in Deutschland bspw. nach 15 Minuten) eine bestimmte Leistung zu bringen. Bei der Stundenreserve ist die Leistung nach 60 Minuten zu erbringen.

Außerdem wird die Stromproduktion während transienter Anlagenzustände, also solcher Zustände, in denen ein Kraftwerk von einem Leistungsniveau auf eine anderes überführt wird, häufig geringer vergütet, als die kontinuierliche Stromproduktion bei der mit dem Netzbetreiber vereinbarten Leistung. Es besteht daher ein Bedarf, die transienten Zustände möglichst kurz zu halten.

Aufgabe der vorliegenden Erfindung ist es, ein Verfahren zum Hochfahren einer Gas- und Dampfturbinenanlage zur Verfügung zu stellen, mit dem diese rasch auf eine vorgegeben Teillast hochgefahren werden kann.

Diese Aufgabe wird durch ein Verfahren zum Hochfahren einer Gas- und Dampfturbineanlage nach Anspruch 1 gelöst. Die abhängigen Ansprüche enthalten vorteilhafte Ausgestaltungen des erfindungsgemäßen Verfahrens.

Erfindungsgemäß wird ein Verfahren zum Hochfahren einer Gas- und Dampfturbinenanlage mit einer Gasturbine, einer Dampfturbine, wenigstens einem Wasser-Dampf-Kreislauf und wenigstens einer Bypassstation, über die der Wasser-Dampf-Kreislauf an der Dampfturbine vorbeigeführt werden kann, auf eine vorgegebene Anlagenlast zur Verfügung gestellt. Das Verfahren umfasst die Schritte:
1. Bringen der Gasturbinenanlage auf eine Gasturbinenlast, bei der die Gas- und Dampfturbinenanlage die vorgegebene Anlagenlast aufweist. Während dieser Phase wird der Wasser-Dampf-Kreislauf an der Dampfturbine vorbeigeführt. Mit anderen Worten, die Bypassstation ist bzw. die Bypassstationen sind vollständig geöffnet.
2. Synchronisieren der Dampfturbine, nachdem diese angewärmt ist und die Betriebsparameter des Wasser-Dampf-Kreislaufes eingestellt sind. Die Betriebsparameter umfassen insbesondere den Dampfdruck, die Dampftemperatur, die Dampfmenge und die Reinheit des Dampfes im Wasser-Dampf-Kreislauf.
3. Belasten der Dampfturbine durch Schließen der Bypassstationen und Überleiten des Dampfes auf die Dampfturbine. Hierbei erfolgt gleichzeitig ein Entlasten der Gasturbine derart, dass die Anlagenlast konstant gehalten wird. Nach der vollständigen Dampfübernahme, d.h. nach dem vollständigen Schließen der Bypassstation bzw. der Bypassstationen, erfolgt der Betrieb der Anlage bei der gewünschten Anlagenleistung im kombinierten Gas- und Dampfturbinenbetrieb.

Das beschriebene Verfahren ermöglicht eine Verkürzung der Anfahrzeit von Anlagenstillstand bis Erreichen einer vorgegebenen Teillast um etwa 15 Minuten, wobei die Verkürzung von der vorgegebenen Anlagenlast abhängt. Zu Beginn des Verfahrens wird die Anlagenlast alleine von der Gasturbine getragen. Erst am Ende des Verfahrens wird die Anlagenlast sowohl von der Gasturbine als auch von der Dampfturbine gemeinsam getragen.

Im Unterschied zum erfindungsgemäßen Verfahren werden Gas- und Dampfturbinenkraftwerke im Stand der Technik gestartet, indem zuerst die Gasturbine gestartet wird und auf eine Teillast gebracht wird, die durch den sogenannten IGV-Eckpunkt vorgegeben ist. Der IGV-Eckpunkt steht für eine bestimmte Stellung der Leitschaufeln am Verdichtereinlass der Gasturbine, welcher zu einem optimalen Wirkungsgrad und damit zu einem geringen Brennstoffverbrauch und geringen Schadstoffausstoß führt. Der IGV-Eckpunkt entspricht etwa 50% der Volllast der Gasturbinenanlage. In diesem Zustand wird die Gasturbine so lange gehalten und der Wasser-Dampf-Kreislauf solange im Bypassbetrieb betrieben, bis die Dampfturbine angewärmt und die Betriebsparameter des Wasser-Dampf-Kreislaufes eingestellt sind. Danach wird die Dampfturbine angestoßen, synchronisiert und belastet. Die Bypassstationen werden immer weiter geschlossen, sodass immer mehr Dampf auf die Dampfturbine übergeleitet wird. Erst wenn alle Bypassstationen geschlossen sind, wird die Gasturbine weiter hochgefahren.

Das aus dem Stand der Technik bekannte Verfahren ermöglicht es jedoch nicht, die Gas- und Dampfturbinenanlage rasch auf eine Teillast hochzufahren, die oberhalb des IGV-Eckpunktes liegt. Aus diesem Grund wird im Stand der Technik die Gasturbine alleine auf die angeforderte Teillast gefahren und dort ohne Zuschalten der Dampfturbine gehalten, wenn eine Teillast oberhalb des IGV-Eckpunktes rasch erreicht werden soll. Der Wasser-Dampf-Kreislauf befindet sich währenddessen im Bypassbetrieb. Soll die Anlage später in den Gas- und Dampfturbinenbetrieb umgeschaltet werden, so wird die Gasturbinenlast auf den IGV-Eckpunkt zurückgefahren und die Dampfturbine wie oben beschrieben gestartet.

Das Verfahren nach Stand der Technik hat gegenüber dem erfindungsgemäßen Verfahren den Nachteil, dass das Betreiben der Gas- und Dampfturbinenanlage alleine mit der Gasturbine einen schlechteren Wirkungsgrad aufweist, als das Betreiben der Anlage im kombinierten Gas- und Dampfturbinenbetrieb. Mit dem erfindungsgemäßen Verfahren zum Hochfahren einer Gas- und Dampfturbinenanlage ist es im Unterschied zum Stand der Technik möglich, eine Gas- und Dampfturbinenanlage auch dann im Gas- und Dampfturbinenbetrieb zu betreiben, wenn eine Anlagenlast, die oberhalb des IGV-Eckpunktes liegt, rasch erreicht werden soll.

Neben dem schnelleren Erreichen der vom Netzbetreiber geforderten Leistung erhöht das erfindungsgemäße Verfahren auch die Anlagenflexibilität und ermöglicht die Teilnahme am Regelenergiemarkt im kombinierten Gas- und Dampfturbinenbetrieb, d.h. mit im Vergleich zum reinen Gasturbinenbetrieb höherem Wirkungsgrad und damit geringerem Brennstoffverbrauch, so dass sich die Gestehungskosten der Energie verringern lassen.

Um die vorgegebene Anlagenlast möglichst rasch zu erreichen, ist es besonders vorteilhaft, die Gasturbinenanlage mit maximal zulässiger Lastrampe auf die Gasturbinenlast zu fahren.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figuren.

Figur 1 zeigt ein Schemadiagramm für eine Gas- und Dampfturbinenanlage.

Figur 2 zeigt ein Diagramm, welches die Gasturbinenlast und die Dampfturbinenlast in Abhängigkeit von der Zeit, die seit dem Starten der Gasturbinenanlage vergangen ist, darstellt.

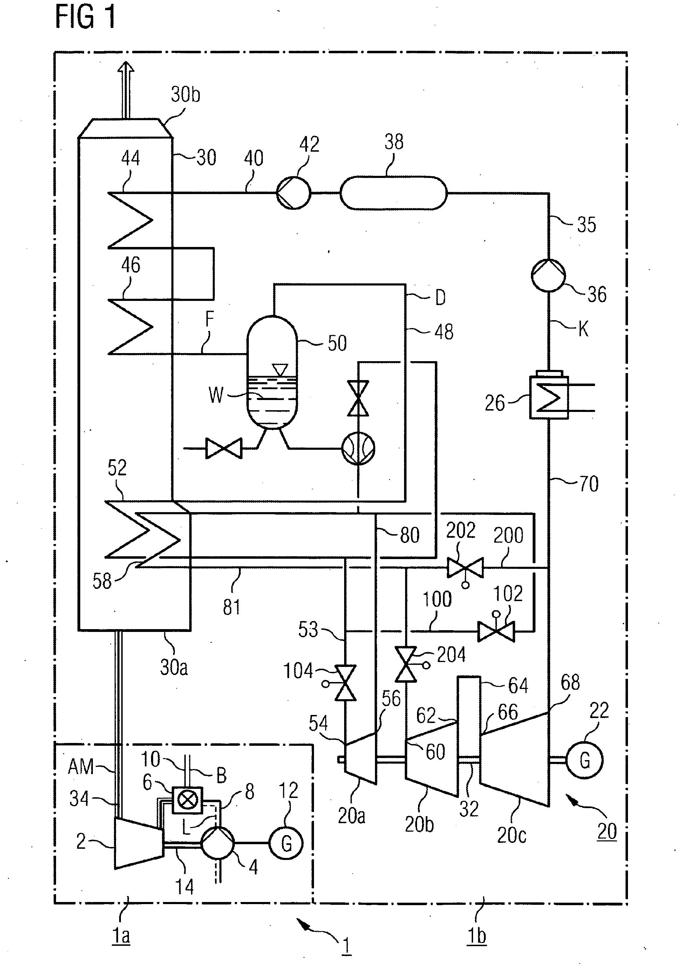

Die in Figur 1 schematisch dargestellte Gas- und Dampfturbinenanlage 1 umfasst eine Gasturbinenanlage 1a sowie eine Dampfturbinenanlage 1b. Die Gasturbinenanlage 1a ist mit einer Gasturbine 2, einem Verdichter 4 sowie wenigstens einer zwischen den Verdichter 4 und die Gasturbine 2 geschalteten Brennkammer 6 ausgestattet. Mittels des Verdichters 4 wird Frischluft L angesaugt, verdichtet, und über die Frischluftleitung 8 einem oder mehreren Brennern der Brennkammer 6 zugeführt. Die zugeführte Luft wird mit über eine Brennstoffleitung 10 zugeführtem flüssigen oder gasförmigen Brennstoff B gemischt und das Gemisch entzündet. Die dabei entstehenden Verbrennungsabgase bilden das Arbeitsmedium AM der Gasturbinenanlage 1a, welches der Gasturbine 2 zügeführt wird, wo es unter Entspannung Arbeit leistet und eine mit der Gasturbine 2 gekoppelte Welle 14 antreibt. Die Welle 14 ist außer mit der Gasturbine 2 auch mit dem Luftverdichter 4 sowie einem Generator 12 gekoppelt, um diese anzutreiben. Das entspannte Arbeitsmedium AM wird über eine Abgasleitung 34 an einen Abhitzedampferzeuger 30 der Dampfturbinenanlage 1b abgeführt.

Im Abhitzedampferzeuger 30 wird das von der Gasturbine 1a mit einer Temperatur von ca. 500-600° Celsius ausgegebenen Arbeitsmedium zum Erzeugen und Überhitzen von Dampf verwendet.

Die Dampfturbinenanlage 1b umfasst neben dem Abhitzedampferzeuger 30, der insbesondere als Zwangsdurchlaufssystem ausgebildet sein kann, eine Dampfturbine 20 mit Turbinenstufen 20a, 20b, 20c und einen Kondensator 26. Der Abhitzedampferzeuger 30 und der Kondensator 26 bilden zusammen mit Kondensatleitungen beziehungsweise Speisewasserleitungen 35, 40 sowie mit Dampfleitungen 48, 53, 64, 70, 80, 100 ein Dampfsystem, welches zusammen mit der Dampfturbine 20 einen Wasser-. Dampf-Kreislauf bildet.

Wasser aus einem Speisewasserbehälter 38 wird mittels einer Speisewasserpumpe 42 einem Hochdruckvorwärmer 44, auch Economizer genannt, zugeführt und von dort an einen ausgangsseitig mit dem Economizer 44 verbundenen, für einen Durchlaufbetrieb ausgelegten Verdampfer 46 weitergeleitet. Der Verdampfer 46 ist seinerseits ausgangsseitig über eine Dampfleitung 48, in die ein Wasserabscheider 50 geschaltet ist, an einen Überhitzer 52 angeschlossen. Über eine Dampfleitung 53 ist der Überhitzer 52 ausgangsseitig mit dem Dampfeingang 54 der Hochdruckstufe 20a der Dampfturbine 20 verbunden.

In der Hochdruckstufe 20a der Dampfturbine 20 treibt der vom Überhitzer 52 überhitzte Dampf die Turbine an, bevor er über den Dampfausgang 56 der Hochdruckstufe 20a an einen Zwischenüberhitzer 58 weitergegeben wird.

Nach der Überhitzung im Zwischenüberhitzer 58 wird der Dampf über eine weitere Dampfleitung 81 an den Dampfeingang 60 der Mitteldruckstufe 20b der Dampfturbine 20 weitergeleitet, wo er die Turbine antreibt.

Der Dampfausgang 62 der Mitteldruckstufe 20b ist über eine Überströmleitung 64 mit dem Dampfeinlass 66 der Niederdruckstufe 20c der Dampfturbine verbunden. Nachdem Durchströmen der Niederdruckstufe 20c und dem damit verbundenen Antrieben der Turbine wird der abgekühlte und entspannte Dampf über den Dampfausgang 68 der Niederdruckstufe 20c an die Dampfleitung 70 ausgegeben, die ihn zum Kondensator 26 führt.

Der Kondensator 26 wandelt den eingehenden Dampf in Kondensat um und gibt das Kondensat über die Kondensatleitung 35 mittels einer Kondensatpumpe 36 an den Speisewasserbehälter 38 weiter.

Neben den bereits genannten Elementen des Wasser-Dampf-Kreislaufes umfasst dieser außerdem eine Bypassleitung 100, die sog. Hochdruckumleitung, die von der Dampfleitung 53 abzweigt, bevor diese den Dampfeinlass 54 der Hochdruckstufe 20a erreicht. Die Hochdruckumleitung 100 umgeht die Hochdruckstufe 20a und mündet in die Zuleitung 80 zum Zwischenüberhitzer 58. Ein weitere Bypassleitung, die sog. Mitteldruckumleitung 200, zweigt von der Dampfleitung 81, bevor diese in den Dampfeinlass 60 der Mitteldruckstufe 20b mündet. Die Mitteldruckumleitung 200 umgeht sowohl die Mitteldruckstufe 20b als auch die Niederdruckstufe 20c und mündet in die zum Kondensator 26 führende Dampfleitung 70.

In die Hochdruckumleitung 100 und die Mitteldruckumleitung 200 sind Absperrventile 102, 202 eingebaut, mit welchem sie sich absperren lassen. Ebenso befinden sich Absperrventile 104, 204 in der Dampfleitung 53 bzw. in der Dampfleitung 81, und zwar jeweils zwischen dem Abzweigpunkt der Bypassleitung 100 bzw. 200 und dem Dampfeinlass 54 der Hochdruckstufe 20a bzw. dem Dampfeinlass 60 der Mitteldruckstufe 20a.

Die Bypassleitungen 100, 200 und die Absperrventile 102, 104, 202, 204 dienen dazu, während des Anfahrens der Gas- und Dampfturbinenanlage 1 einen Teil des Dampfes zur Umgehung der Dampfturbine 2 umzuleiten.

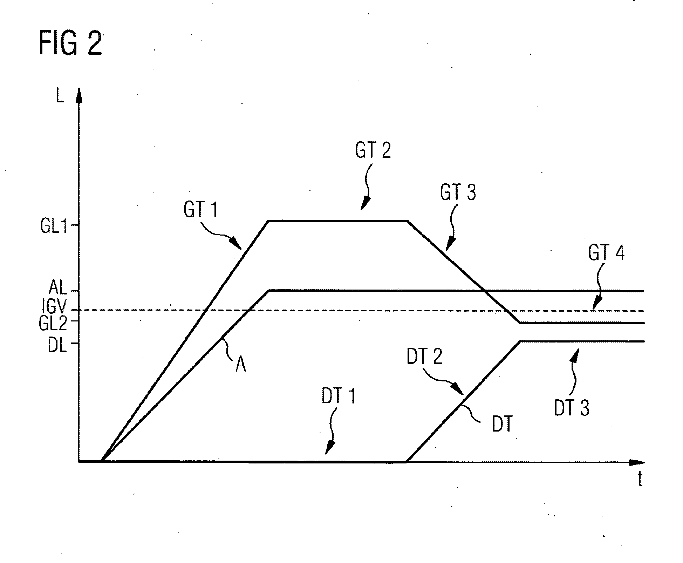

Nachfolgend wird das erfindungsgemäße Verfahren zum Hochfahren einer Gas- und Dampfturbinenanlage auf eine vorgegebene Anlagenlast mit Bezug auf die in Figur 1 dargestellte Anlage und das in Figur 2 dargestellte Diagramm beschrieben.

Zu Beginn des Verfahrens wird die Gasturbinenanlage 1a gestartet und mit maximaler Lastrampe belastet, nachdem sie synchronisiert worden ist (Phase GT1 in Fig. 2). Nachdem die geforderte Anlagenlast AL erreicht ist, wird die Gasturbine auf der für das Halten der Anlagenlast AL nötigen Gasturbinenlast GL1 gehalten (Phase GT2).

Das aus der Gasturbine austretende Arbeitsmedium AM wird dem Abhitzedampferzeuger 30 über einen Eingang 30a zugeführt. Das entspannte Arbeitsmedium AM durchströmt den Abhitzedampferzeuger 30 und verlässt diesen über einen Ausgang 30b in Richtung auf einen in Figur 1 nicht dargestellten Kamin.

Beim Durchströmen des Abhitzedampferzeugers 30 wird Wärme vom Arbeitsmedium an das Wasser bzw. den Dampf im Wasser-Dampf-Kreislauf übertragen. Die übertragene Abhitze führt zu Beginn der Dampfproduktion im Wasser-Dampf-Kreislauf. In dieser Phase des Hochfahrens sind die Absperrventile 102 und 202 vollständig geöffnet. Die Absperrventile 104 und 204 sind hingegen vollständig geschlossen, so dass der gesamte Dampf durch die Bypassleistung 100 bzw. 200 strömt und so unter Umgehung der Dampfturbine 20 direkt dem Kondensator 26 zugeführt wird. Der Dampf führt hierbei zu einer Drucksteigerung im Dampfsystem. Der Druck steigt daher kontinuierlich an, wodurch die Dämpfproduktion im Abhitzedampferzeuger verringert wird.

Nachdem sich in Phase DT1 die gewünschten Betriebsparameter im Wasser-Dampf-Kreislauf eingestellt haben und die Dampfturbine durch ein teilweises Öffnen der Absperrventile 104 und 204 angewärmt worden ist, wird die Dampfturbine mit dem Netz synchronisiert. Anschließend erfolgt ein Belasten der Dampfturbine 200, indem die Absperrventile 104 und 204 immer weiter geöffnet und die Absperrventile 102 und 200 immer weiter geschlossen werden, sodass ein immer größerer Teil des Dampfes durch die Dampfturbine 20 geleitet wird (Phase DT2). Dadurch wird die Dampfturbinenlast gesteigert. Um ein Ansteigen der Anlagenlast aufgrund der Steigerung der Dampfturbinenlast zu vermeiden, wird die Gasturbinenlast gleichzeitig kontinuierlich auf die Gasturbinenlast GL2 zurückgefahren (Phase GT3). Die Rampe, mit der die Gasturbinenlast zurückgefahren wird, ist so gewählt, dass die Zunahme der Anlagenlast aufgrund der steigenden Dampfturbinenlast ausgeglichen wird. In der Summe wird die Anlagenlast AL so konstant gehalten.

Nachdem die Absperrventile 104 und 204 vollständig geöffnet und die Absperrventile 102 und 202 vollständige geschlossen sind, d.h. nachdem die Bypassstationen vollständig geschlossen sind, wird die Anlage im kombinierten Gas- und Dampfturbinenbetrieb auf der gewünschten Leistung betrieben (Phasen GT4 und DT3). Die Dampfturbine und die Gasturbine werden dann auf ihren jeweiligen Lasten GL2 und DL gehalten.

## Patentansprüche

1. Verfahren zum Hochfahren einer Gas- und Dampfturbinenanlage (1) mit einer Gasturbine (2), einer Dampfturbine (20), wenigstens einem Wasser-Dampf-Kreislauf und wenigstens einer Bypassstation (100, 102, 200, 202), über die der Wasser-Dampf-Kreislauf an der Dampfturbine (20) vorbeigeführt werden kann, auf eine vorgegebene Anlagenlast mit den Schritten:
- Bringen der Gasturbine (2) auf eine Gasturbinenlast, bei der die Gas- und Dampfturbinenanlage (1) die vorgegebene Anlagenlast aufweist, wobei der Wasser-Dampf-Kreislauf an der Dampfturbine (20) vorbeigeführt wird;
- Synchronisieren der Dampfturbine (20), nachdem diese angewärmt ist und die Betriebsparameter des Wasser-Dampf-Kreislaufes eingestellt sind;
- Belasten der Dampfturbine (20) durch Schließen der Bypassstationen (100, 102, 200, 202) und Überleiten des Dampfes auf die Dampfturbine (20) bei gleichzeitigem Entlasten der Gasturbine (2) derart, dass die Anlagenlast konstant gehalten wird.

2. Verfahren nach Anspruch 1, in dem die Gasturbinenanlage (2) mit maximal zulässiger Lastrampe auf die Gasturbinenlast gefahren wird.

3. Verfahren nach Anspruch 1 oder 2, in dem die Gasturbinenlast über dem IGV-Eckpunkt liegt.

## Claims

1. Method for running up a combined-cycle power plant (1), with a gas turbine (2), with a steam turbine (20), with at least one water/steam circuit and with at least one bypass station (100, 102, 200, 202), via which the water/steam circuit can be routed past the steam turbine (20), to a predetermined power plant load, with the steps:
- bringing the gas turbine (2) to a gas turbine load at which the combined-cycle power plant (1) has the predetermined power point load, the water/steam circuit being routed past the steam turbine (20);
- synchronizing the steam turbine (20) after this has been warmed up and the operating parameters of the water/steam circuit are set;
- loading the steam turbine (20) by closing the bypass stations (100, 102, 200, 202) and transferring the steam to the steam turbine (20), while at the same time relieving the gas turbine (2), in such a way that the power plant load is kept constant.

2. Method according to Claim 1, in which the gas turbine (2) is run up to the gas turbine load by means of a maximum permissible load ramp.

3. Method according to Claim 1 or 2, in which the gas turbine load lies above the IGV edge point.

## Revendications

1. Procédé de mise en route d'une installation (1) de turbine à gaz et de turbine à vapeur ayant une turbine ( 2 ) à gaz, une turbine ( 20 ) à vapeur, au moins un circuit eau-vapeur et au moins un poste ( 100, 102, 200, 202 ) de dérivation dans lequel le circuit eau-vapeur peut passer devant la turbine ( 20 ) à vapeur jusqu'à une charge de l'installation prescrite, comprenant les stades dans lesquels :
- on porte la turbine ( 2 ) à gaz à une charge de turbine à gaz, dans laquelle l'installation ( 1 ) de turbine à gaz et de turbine à vapeur a la charge de l'installation prescrite, le circuit d'eau-vapeur passant devant la turbine ( 2 ) à vapeur,
- on synchronise la turbine ( 20 ) à vapeur après que celle-ci s'est échauffée et on règle les paramètres de fonctionnement du circuit eau-vapeur,
- on charge la turbine ( 20 ) à vapeur en fermant les postes (100, 102, 200, 202) de dérivation et en faisant passer la vapeur sur la turbine ( 20 ) à vapeur, tout en déchargeant la turbine ( 2 ) à gaz de sorte que la charge de l'installation soit maintenue constante.

2. Procédé selon la revendication 1, dans lequel on fait fonctionner l'installation ( 2 ) de turbine à gaz avec une rampe de charge maximum admissible jusqu'à la charge de la turbine à gaz.

3. Procédé selon la revendication 1 ou 2, dans lequel la charge de la turbine à gaz est au-dessus du sommet de l'aube directrice d'admission.
